# EUROPÄISCHE PATENTSCHRIFT

(11) **EP 2 642 582 B1**
(45) Veröffentlichungstag und Bekanntmachung des Hinweises auf die Patenterteilung: **24.02.2016**
(21) Anmeldenummer: 13001434.3
(22) Anmeldetag: 20.03.2013
(51) Int. Cl.: H01M 10/42, H01M 10/48, H01M 2/34, H01G 11/18

(54) **Elektrisches Überbrückungselement, insbesondere für Speicherzellen eines Energiespeichers**
Electrical bridging element, in particular for the cells of an energy accumulator
Elément de pontage électrique, notamment pour les cellules d'un accumulateur d'énergie

(30) Priorität: 23.03.2012 DE 102012005979
(43) Veröffentlichungstag der Anmeldung: 25.09.2013
(73) Patentinhaber: Fraunhofer-Gesellschaft zur Förderung der angewandten Forschung e.V., 80686 München (DE)
(72) Erfinder: Dorp, Joachim vom, 91054 Erlangen (DE); Erlbacher, Tobias, 91099 Poxdorf (DE); Frey, Lothar, 91315 Höchstadt/Aisch (DE)
(74) Vertreter: Gagel, Roland

(56) Entgegenhaltungen:
- EP-A1- 0 170 883
- EP-A1- 0 665 568
- US-A- 5 362 576

## Beschreibung

### Technisches Anwendungsgebiet

Die vorliegende Erfindung betrifft ein elektrisches Überbrückungselement, das sich insbesondere für die Überbrückung von defekten Speicherzellen eines Energiespeichers eignet. Die Erfindung betrifft auch einen Energiespeicher mit mehreren seriell verschalteten Speicherzellen, bei dem parallel zu jeder der Speicherzellen ein elektrisches Überbrückungselement geschaltet ist.

Elektrische Energiespeicher sind Schlüsselkomponenten für Hybrid-, Brennstoffzellen- und Elektrofahrzeuge. Insbesondere moderne Hochleistungsenergiespeicher, die aus seriell und parallel geschalteten Lithium-Ionen-Akkumulatorzellen bestehen, stellen bezüglich Sicherheit und Zuverlässigkeit sehr hohe Anforderungen an die elektrischen und thermischen Betriebsbedingungen jeder einzelnen Akkumulatorzelle. Bereits der Defekt einer einzelnen Akkumulatorzelle kann ohne geeignete Maßnahmen zur Beschädigung oder zum Ausfall des gesamten Energiespeichers führen.

Eine schadhafte Lithium-Ionen-Akkumulatorzelle weist einen hohen Serienwiderstand im Stromkreis auf und erhöht damit die Verlustleistung im Gesamtsystem. Steigt dieser Serienwiderstand zu stark an, wird in der schadhaften Akkumulatorzelle eine beachtliche Energiemenge als Verlustleistung verbraucht. Dies kann in konkreten Fall zur Überhitzung oder zum Brand, im schlimmsten Fall auch zur Explosion des gesamten Hochleistungsenergiespeichers führen. Zur Behebung dieses sicherheitsrelevanten Problems muss die schadhafte Akkumulatorzelle aus der Zellenmatrix getrennt werden, möglichst ohne den Stromkreis im Gesamtsystem zu unterbrechen. Diese Abtrennung kann durch Überbrückung der defekten Speicherzelle mit einem elektrischen Überbrückungselement erreicht werden, durch das die beiden Pole der Speicherzelle kurzgeschlossen werden.

### Stand der Technik

Aus der DE 37 21 754 ist ein Überbrückungselement zur Sicherung von Batteriezellen bekannt, das eine irreversible Überbrückung von hochohmig ausfallenden, zerstörten Speicherzellen ermöglicht. Das Überbrückungselement besteht aus zwei schichtweise in Serie angeordneten Halbleiterbauelementen mit jeweils unterschiedlicher Strom/Spannungs-Charakteristik. Bei hochohmigem Ausfall einer zerstörten Speicherzelle fließt der hohe Ladestrom durch die beiden Halbleiterbauelemente, die aufgrund der daraus resultierenden starken Temperaturerhöhung durchlegieren und die Speicherzelle dadurch irreversibel niederohmig kurzschließen.

Ein derartiges passives Überbrückungselement wird allerdings nur ausgelöst, wenn die Akkumulatorzelle bereits stark degradiert ist. Ein vorzeitiges Auslösen, etwa zur Verhinderung hoher Verlustleistungen, ist nicht möglich. EP0170883 beschreibt ein weiteres Überbrückungselement, mit zwei Anschlusselementen zur Stromkreisüberbrückung einer Speicherzelle durch ein Halbleiter-Bauelement, das über eine elektrisch leitende Schicht mit den beiden Anschlusselementen verbunden und beim Durchfluss eines Stromes, der die Temperatur in der elektrisch leitenden Schicht und im Halbleiter-Bauelement auf einen definierten Wert erhöht, mit dieser zu einem Kurzschlusselement zusammen legiert ist.

Die Aufgabe der vorliegenden Erfindung besteht darin, ein elektrisches Überbrückungselement anzugeben, das sich für die Überbrückung von defekten Speicherzellen eines Energiespeichers eignet und bei Bedarf eine Überbrückung auch bereits vor dem Ausfall einer Speicherzelle ermöglicht.

### Darstellung der Erfindung

Die Aufgabe wird mit dem elektrischen Überbrückungselement gemäß Patentanspruch 1 gelöst.
Patentanspruch 9 gibt einen Energiespeicher an, bei dem derartige Überbrückungselemente zum Einsatz kommen. Vorteilhafte Ausgestaltungen des elektrischen Überbrückungselementes sowie des Energiespeichers sind Gegenstand der abhängigen Patentansprüche oder lassen sich der nachfolgenden Beschreibung sowie dem Ausführungsbeispiel entnehmen.

Das vorgeschlagene elektrische Überbrückungselement setzt sich aus zwei elektrischen Leitern zusammen, zwischen denen eine Schichtfolge mit wenigstens einer elektrischen Isolationsschicht und einem oder mehreren reaktiven Schichtstapeln ausgebildet ist, in denen sich eine exotherme Reaktion auslösen lässt. Die elektrische Isolationsschicht isoliert in dieser Schichtfolge die beiden elektrischen Leiter elektrisch gegeneinander. Der eine oder die mehreren reaktiven Schichtstapel und die wenigstens eine Isolationsschicht sind dabei so aufeinander abgestimmt bzw. so ausgebildet oder dimensioniert, dass sich die Isolationsschicht durch die bei der exothermen Reaktion von der oder den reaktiven Schichtstapeln abgegebene Wärmeenergie auflöst und eine elektrische Verbindung zwischen den elektrischen Leitern hergestellt wird. Unter der Auflösung der Isolationsschicht wird dabei verstanden, dass nach dem Ablauf der exothermen Reaktion die Isolationsschicht nicht mehr vorhanden oder zumindest soweit degradiert ist, dass sie keine elektrisch isolierende Wirkung zwischen den beiden elektrischen Leitern mehr entfaltet. Die Isolationsschicht kann durch die freigesetzte Wärmeenergie beispielsweise verbrennen oder verdampfen. Die Isolationsschicht kann durch freigesetzte Wärmeenergie auch nur schmelzen und entweder durch einen anliegenden mechanischen Druck aus dem Bereich zwischen den elektrischen Leitern verdrängt werden oder sich mit einem elektrisch leitfähigen Material einer benachbarten Schicht der Schichtfolge, beispielsweise einer zusätzlichen Schicht aus einem Lotmaterial, vermischen.

Die bei dem Verfahren eingesetzten reaktiven Schichtstapel setzen sich aus einer großen Anzahl von Nanoschichten zusammen, d.h. Schichten mit Schichtdicken im Bereich von Nanometern, bspw. im Bereich von 1 nm bis 500 nm, wobei sich in der Regel Schichten aus zwei unterschiedlichen Materialien abwechseln, die durch geeigneten Energieeintrag exotherm miteinander reagieren. Derartige Schichtstapel sind auch unter dem Begriff der reaktiven Nanofolien bekannt und beispielsweise in der WO 01/83182 A1 näher beschrieben. Diese reaktiven Schichtstapel bzw. Nanofolien werden beispielsweise eingesetzt, um zwei Bauteile miteinander zu verlöten.

Bei dem vorgeschlagenen aktiven elektrischen Überbrückungselement werden einer oder mehrere dieser reaktiven Schichtstapel genutzt, um die elektrische Isolationsschicht aufzulösen und eine elektrische Verbindung zwischen den elektrischen Leitern herzustellen. Da es sich hierbei um ein aktives elektrisches Überbrückungselement handelt, kann eine Überbrückung einer Speicherzelle bei geeigneter Überwachung auch bereits vor dem vollständigen Ausfall der Speicherzelle in einem Energiespeicher ausgelöst werden. Damit können hohe Verlustleistungen in Energiespeichern vermieden werden.

Das vorgeschlagene elektrische Überbrückungselement wird zwar bevorzugt zur elektrischen Überbrückung von Speicherzellen in Energiespeichern bzw. Akkumulatoren wie den bereits genannten Lithium-Ionen-Akkumulatoren eingesetzt, lässt sich aber selbstverständlich auch für andere Anwendungen nutzen, in denen eine irreversible elektrische Überbrückung oder elektrische Verbindung gezielt ausgelöst oder hergestellt werden soll.

In einer bevorzugten Weiterbildung des vorgeschlagenen Überbrückungselementes weist die Schichtfolge an einem oder an beiden elektrischen Leitern eine Schicht aus einem lotfähigen Material auf, das durch die von der oder den in der Schichtfolge angeordneten reaktiven Schichtstapeln abgegebene Wärmeenergie zur Bildung einer Lotverbindung zumindest teilweise aufschmilzt. Ein derartiges Lotmaterial hat den Vorteil, dass das Material einer an die Lotschicht angrenzenden Isolationsschicht sich leicht im Lot auflösen kann und damit die Isolationsschicht verschwindet.

In der Schichtfolge können weitere Schichten vorhanden sein, beispielsweise auch eine weitere elektrische Isolationsschicht oder mehrere reaktive Schichtstapel. Weiterhin ist es möglich, auch andere Schichten wie beispielsweise Haftschichten in der Schichtfolge einzusetzen, solange diese die elektrische Kontaktierung zwischen den beiden elektrischen Leitern nach dem Auslösen der exothermen Reaktion nicht verhindern.

In einer Ausgestaltung des Überbrückungselementes werden die beiden elektrischen Leiter von beiden Seiten gegen die Schichtfolge gedrückt. Dies kann über geeignete elastische Elemente wie beispielsweise Federelemente erfolgen, die in einer entsprechend starren Halterung gelagert sind und von beiden Seiten eine entsprechende Kraft auf die elektrischen Leiter ausüben. Weiterhin ist es im Fall von massiven elektrischen Leitern möglich, diese mit einer mechanischen Vorspannung zu versehen, durch die sie gegen die Schichtfolge gedrückt werden. Hierzu müssen die beiden Leiter an jeweils einem außerhalb des Kontaktbereiches mit der Schichtfolge liegenden Bereich an einem starren Träger fixiert werden, so dass die gewünschte Vorspannung erzeugt werden kann. Durch den Druck der elektrischen Leiter gegen die Schichtfolge wird eine zuverlässigere Herstellung der elektrischen Verbindung nach dem Auslösen der exothermen Reaktion erreicht. Damit ist es beispielsweise möglich, alleine durch Verflüssigen der Isolationsschicht das Isolationsmaterial aus dem Zwischenraum zwischen den elektrischen Leitern zu drücken und bereits dadurch die elektrische Verbindung herzustellen. Auch im Falle der Nutzung einer oder mehrerer lotfähiger Schichten in der Schichtfolge wird durch den ausgeübten Druck eine zuverlässigere elektrische Lötverbindung zwischen den elektrischen Leitern hergestellt.

Die Materialien des reaktiven Schichtstapels sind vorzugsweise so gewählt, dass dieser nach Ablauf der exothermen Reaktion elektrisch leitfähig ist. Alternativ kann dieser Schichtstapel auch mit Durchgangsöffnungen durchsetzt sein, die sich bei Einsatz einer angrenzenden Lotschicht dann mit Lotmaterial auffüllen und auf diese Art die elektrische Verbindung durch den Schichtstapel hindurch herstellen.

Der aktive Schichtstapel muss hinsichtlich der gewählten Schichtmaterialien und Schichtdicken sowie der Anzahl der Schichten so dimensioniert oder ausgebildet sein, dass bei der exothermen Reaktion gegebenenfalls in Verbindung mit einem oder mehreren weiteren reaktiven Schichtstapeln ausreichend Wärmeenergie für die gewünschte Auflösung der Isolationsschicht(en) sowie gegebenenfalls für das Aufschmelzen der Lotschicht(en) bereitgestellt wird. Auf der anderen Seite muss dieser Schichtstapel auch so dimensioniert sein, dass eine ungewollte Auslösung der exothermen Reaktion verhindert wird. Dem Fachmann sind aus dem Stand der Technik geeignete Dimensionierungen bekannt. Die reaktiven Schichtstapel weisen in der Regel zwischen 100 und mehreren 1000 dünnen Schichten mit Schichtdicken im Bereich von 1 bis 100 nm auf. Die Gesamtdicke eines reaktiven Schichtstapels kann beispielsweise zwischen 10 *µ*m und 1 mm betragen. Beispielhafte Materialien für die Nanoschichten des Schichtstapels sind Kombinationen von Ni und Cu oder von Ni und Al. Selbstverständlich lassen sich auch andere Materialkombinationen einsetzen, mit denen sich eine exotherme Reaktion auslösen lässt. Die Isolationsschicht kann aus den unterschiedlichsten isolierenden Materialien bestehen. Besonders vorteilhaft lassen sich isolierende Lacke, insbesondere Fotolacke oder Sprühlacke, einsetzen.

Zur Auslösung des reaktiven Schichtstapels ragt dieser vorzugsweise auf mindestens einer Seite der Schichtfolge seitlich über die anderen Schichten hinaus. Dadurch lässt sich dieser Schichtstapel beispielsweise in einfacher Weise elektrisch kontaktieren, um durch einen kurzen Strom- oder Spannungspuls lokal die exotherme Reaktion auslösen zu können. Die Auslösung kann grundsätzlich durch unterschiedliche Auslöser, beispielsweise durch einen direkten Strom/Spannungspuls, einen Lichtpuls (z.B. einer Laserdiode) oder einen Wärmepuls (z.B. über eine aufgebrachte Widerstandsbahn) erfolgen. Bei mehreren reaktiven Schichtstapeln kann die Auslösung auch durch einen benachbarten reaktiven Schichtstapel erfolgen. Die jeweils benötigte Energiemenge ergibt sich aus dem Aufbau des reaktiven Schichtstapels, insbesondere durch die eingesetzten Materialien und die Dicke der einzelnen Schichten bzw. Lagen. Es ist auch ein Aufbau des reaktiven Schichtstapels mit einem oder mehreren unterschiedlich dimensionierten Bereichen möglich. So kann beispielsweise der über die anderen Schichten der Schichtfolge hinausragende Bereich des reaktiven Schichtstapels anders dimensioniert sein oder ein weiterer reaktiver Schichtstapel anderer Dimensionierung auf diesem Bereich aufgebracht sein, durch die eine leichtere Auslösung der exothermen Reaktion bei externem Energieeintrag ermöglicht wird.

Bei der Verwendung des vorgeschlagenen aktiven Überbrückungselementes in einem Energiespeicher, der mehrere seriell verschaltete Speicherzellen enthält, wird parallel zu jeder der Speicherzellen ein derartiges elektrisches Überbrückungselement geschaltet. Vorzugsweise umfasst der Energiespeicher hierbei eine geeignete Messeinrichtung, mit der der bevorstehende oder erfolgte Ausfall einer Speicherzelle detektiert werden kann, sowie eine mit der Messeinrichtung verbundene Auslöseeinrichtung, die dann das dieser Speicherzelle parallel geschaltete Überbrückungselement durch lokalen Energieeintrag auf den reaktiven Schichtstapel dieses Überbrückungselementes auslöst. Geeignete Messeinrichtungen zur Überwachung der Speicherzellen sind in modernen Energiespeichern mit einem Batterie-Managementsystem bereits vorhanden.

### Kurze Beschreibung der Zeichnungen

Das vorgeschlagene Überbrückungselement wird nachfolgend anhand von Ausführungsbeispielen in Verbindung mit den Zeichnungen nochmals näher erläutert. Hierbei zeigen:
- Fig. 1: ein erstes Beispiel für eine Ausgestaltung des vorgeschlagenen Überbrückungselementes;
- Fig. 2: ein zweites Beispiel für eine Ausgestaltung des vorgeschlagenen Überbrückungselementes;
- Fig. 3: ein drittes Beispiel für eine Ausgestaltung des vorgeschlagenen Überbrückungselementes;
- Fig. 4: ein Beispiel für das Aufbringen der Isolationsschicht;
- Fig. 5: ein weiteres Beispiel für das Aufbringen der Isolationsschicht;
- Fig. 6: ein Beispiel für einen Aufbau des reaktiven Schichtstapels zur Verbesserung der Zündbarkeit;
- Fig. 7: ein viertes Beispiel für eine Ausgestaltung des vorgeschlagenen Überbrückungselementes; und
- Fig. 8: ein fünftes Beispiel für eine Ausgestaltung des vorgeschlagenen Überbrückungselementes.

### Wege zur Ausführung der Erfindung

Im Folgenden werden unterschiedliche Ausgestaltungsmöglichkeiten des vorgeschlagenen aktiven Überbrückungselementes schematisch in einer Querschnittansicht dargestellt. Die einzelnen Ausführungsbeispiele unterscheiden sich im Aufbau der Schichtfolge zwischen den beiden Stromleitschienen 2, 3, die in diesen Beispielen die beiden elektrischen Leiter des vorgeschlagenen Überbrückungselementes darstellen. Selbstverständlich können diese elektrischen Leiter auch in anderer Weise realisiert sein. Die beiden Stromleitschienen 2, 3, von denen in den Figuren jeweils nur ein Abschnitt dargestellt ist, sind mit den beiden Polen der Akkumulator-Speicherzelle verbunden, die sie bei einem Ausfall überbrücken soll.

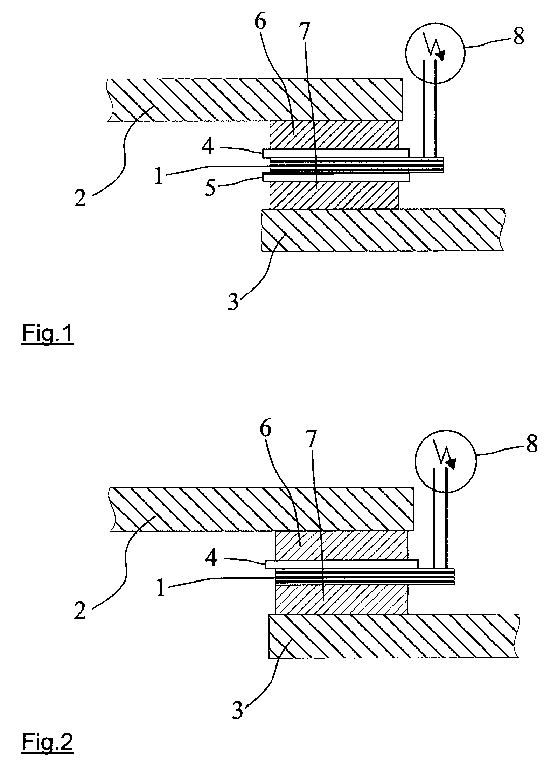

Zur hochohmigen Isolation der beiden Stromleitschienen befindet sich mindestens eine elektrische Isolationsschicht 4, 5 zwischen den in einem Abschnitt mit einer lotfähigen Schicht 6, 7 beschichteten Stromleitschienen. Im Beispiel der Fig. 1 sind zwei derartige elektrische Isolationsschichten 4, 5 beidseitig eines reaktiven Schichtstapels 1 in der Schichtfolge zwischen den Stromleitschienen 2, 3 angeordnet.

Die Auslösung dieses aktiven Überbrückungselementes erfolgt über eine Auslöseeinrichtung 8. Dies kann beispielsweise eine Strom- oder Spannungsquelle, eine Lichtquelle oder auch eine Wärmequelle sein. Die Auslösung erfolgt in diesem Fall durch einen Strom- oder Spannungspuls, durch einen Lichtpuls oder durch einen Wärmepuls, mit denen ein Bereich des reaktiven Schichtstapels 1 aktiviert bzw. gezündet wird, um eine exotherme Reaktion im reaktiven Schichtstapel auszulösen. In Folge dieser Reaktion kommt es zu einer starken Wärmeentwicklung. Durch diese Wärme wird die Isolationsschicht 4, 5 aufgelöst. Aufgrund der hohen Wärmeentwicklung schmelzen auch die beiden Lotschichten 6, 7. Die Isolatorrückstände lösen sich dabei im Lot. Es kommt zu einem elektrischen Kontakt zwischen den beiden Stromleitschienen 2, 3 und somit zu einer elektrischen Überbrückung der Akkumulator-Speicherzelle.

So lässt sich eine derartige Schichtfolge beispielsweise mit zwei Lotschichten aus einem Snhaltigen Lot mit einer Schichtdicke von etwa 30 bis 50 *µ*m, einem mit einer Dicke von etwa 1 bis 5 *µ*m aufgebrachten isolierenden Sprühlack (z.B. Plastik70 von CRC Kontakt Chemie) und einer kommerziell erhältlichen reaktiven Nanofolie (z.B. NanoFoil® NF60 von Indium Corporation) mit einer Gesamtdicke der Nanofolie von etwa 60 *µ*m realisieren. Für die Auslösung der exothermen Reaktion ist der aus der Schichtfolge herausragende Bereich des reaktiven Schichtstapels 1 über zwei Drähte mit einer Batterie verbunden, über die ein kurzer Spannungspuls in der Größenordnung von 9 bis 12 V an den Schichtstapel angelegt werden kann.

Fig. 2 zeigt ein Beispiel, bei dem lediglich eine elektrische Isolationsschicht 4 in der Schichtfolge angeordnet ist. Die elektrische Isolationsschicht 4 wird in der Dicke so gewählt, dass sie die erforderliche Spannungsfestigkeit zwischen den beiden Stromleitschienen 2, 3 aufweist. Ansonsten entsprechen der Schichtaufbau und die Funktionsweise denen der Fig. 1.

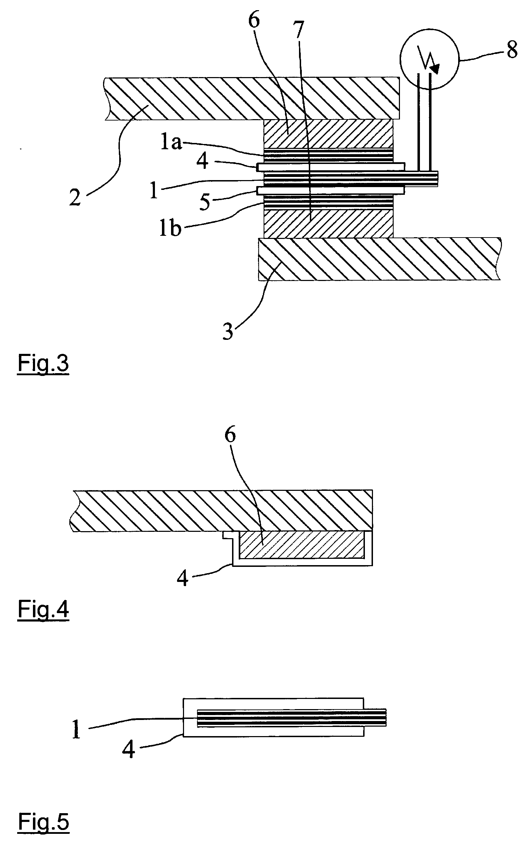

Fig. 3 zeigt ein weiteres Beispiel, bei dem gegenüber der Fig. 1 zusätzlich zwei weitere reaktive Schichtstapel 1a, 1b in der Schichtfolge angeordnet sind. Diese weiteren Schichtstapel können durch die exotherme Reaktion im ersten Schichtstapel 1 ausgelöst werden. Mit einer derartigen Anordnung kann erreicht werden, dass die durch die exothermen Reaktionen entstandene Wärmeenergie beidseitig auf die jeweilige Isolationsschicht 4, 5 einwirkt und die Wärmequelle auch näher an den Lotschichten 6 und 7 liegt.

Fig. 4 zeigt ein Detail eines Beispiels des vorgeschlagenen Überbrückungselementes, bei dem die elektrisch leitfähige Isolierschicht 4 die Lotschicht 6 vollständig bedeckt, wie dies beispielsweise beim Aufbringen der Isolationsschicht als Sprühlack auftritt. Hierbei wird zunächst die Lotschicht 6 auf der Stromleitschiene 2 abgeschieden und anschließend der isolierende Sprühlack aufgesprüht.

In einer anderen Ausgestaltung kann die Isolationsschicht 4, 5 auch beidseitig auf eine reaktive Nanofolie als reaktiven Schichtstapel 1 aufgebracht werden, wie dies in der Fig. 5 im Detail dargestellt ist. Dies kann beispielsweise ebenfalls durch Aufsprühen eines isolierenden Sprühlackes oder durch Eintauchen der Nanofolie in ein flüssiges Isolationsmaterial erfolgen, das sich anschließend verfestigt. Die Isolationsschicht kann selbstverständlich auch nur einseitig auf die Nanofolie aufgebracht werden. Die Nanofolie mit der aufgebrachten Isolationsschicht wird dann auf die jeweilige Lotschicht aufgebracht.

Die Herstellung des Schichtaufbaus der Schichtfolge lässt sich beim vorgeschlagenen Überbrückungselement daher in unterschiedlicher Weise realisieren, beispielsweise auch durch sukzessive Abscheidung der einzelnen Schichten mittels CVD (chemical vapour deposition) oder PVD (physical vapour deposition).

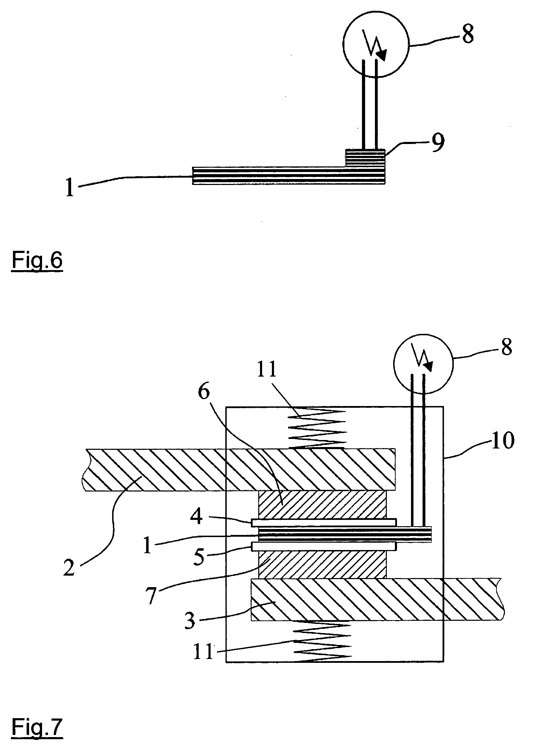

Fig. 6 zeigt ein Beispiel, bei dem auf den aus der Schichtfolge herausragenden Abschnitt des reaktiven Schichtstapels 1 ein weiterer reaktiver Schichtstapel 9 aufgebracht ist, der sich mit geringerem Energieeintrag zünden lässt. Damit können die Verhältnisse in der Schichtfolge durch geeignete Dimensionierung der reaktiven Schichtstapel 1 und 9 so eingestellt werden, dass die zum Auslösen benötigte Energie und die durch die exotherme Reaktion innerhalb der Schichtfolge frei werdende Energie getrennt voneinander dimensioniert werden können. Die jeweils benötigte Energiemenge ergibt sich aus dem Aufbau des reaktiven Schichtstapels, insbesondere dessen Materialien sowie der Dicke der einzelnen Schichten bzw. Lagen.

Zusätzlich kann die Ausbildung der elektrischen Verbindung zwischen den beiden Stromleitschienen 2, 3 durch äußeren Druck auf die beiden Stromleitschienen verbessert werden. Hierzu ist ein Beispiel in Fig. 7 dargestellt, bei dem die beiden Stromleitschienen 2, 3 über zwei in einer starren Halterung 10 gelagerte elastische Elemente 11 gegen die Schichtfolge gedrückt werden. Durch diese mechanische Vorspannung kann ein ausreichender mechanischer Druck während der exothermen Reaktion auf die beiden Verbindungspartner ausgeübt werden, der zu einer besseren elektrisch leitfähigen Verbindung führt. Dies ist insbesondere auch in Verbindung mit den Lotschichten 6, 7 von Vorteil. Wird die exotherme Reaktion so bemessen, dass die beiden Lotschichten zumindest in einzelnen Bereichen vollständig aufschmelzen, so kommt es in Verbindung mit dem ausgeübten Druck zu einer zuverlässigen Lötverbindung zwischen den beiden Stromleitschienen.

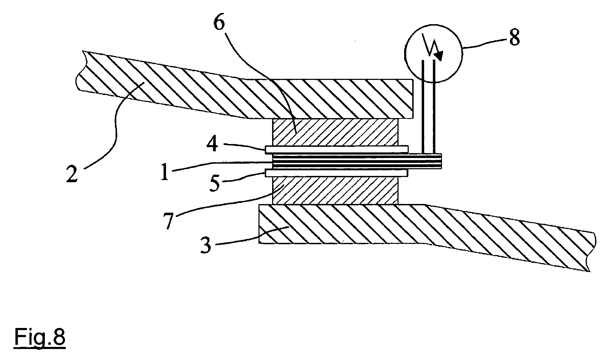

Eine andere Möglichkeit der Erzeugung einer mechanischen Vorspannung ist in Fig. 8 schematisch dargestellt. Hier sind die beiden Stromleitschienen 2, 3 in einem Abschnitt außerhalb des Kontaktbereiches mit der Schichtfolge an einem starren Träger fest fixiert (in der Figur nicht dargestellt) und so gegeneinander verspannt (durch die Biegung in Fig. 8 angedeutet), dass sie gegen die dazwischen liegende Schichtfolge drücken.

Das vorgeschlagene aktive Überbrückungselement arbeitet als irreversible aktive inverse Sicherung, wenn es in einem Energiespeicher parallel zu den einzelnen Speicherzellen verschaltet wird. Es hat einen einfachen, preisgünstigen und zuverlässigen Aufbau. Zum Auslösen muss lediglich ein kurzzeitiger niederenergetischer Zündimpuls (Aktivierungsenergie) auf einen Bereich des reaktiven Schichtstapels aufgebracht werden. Der wesentliche Teil der zum Kurzschluss führenden Energie ist bereits in Form chemischer Energie in dem reaktiven Schichtstapel sowie der möglicherweise vorhandenen mechanischen Vorspannung vorhanden. Das vorgeschlagene aktive Überbrückungselement kann bei geeigneter Überwachung der Speicherzellen bereits frühzeitig ausgelöst werden, ohne dass ein Versagen einzelner Akkumulatorzellen abgewartet werden muss.

### Bezugszeichenliste

- 1: reaktiver Schichtstapel
- 1a/b: weiterer reaktiver Schichtstapel
- 2: erste Stromleitschiene
- 3: zweite Stromleitschiene
- 4: elektrische Isolationsschicht
- 5: elektrische Isolationsschicht
- 6: Lotschicht
- 7: Lotschicht
- 8: Auslöseeinrichtung
- 9: weiterer reaktiver Schichtstapel
- 10: Halterung
- 11: elastisches Element

## Patentansprüche

1. Elektrisches Überbrückungselement aus zwei elektrischen Leitern (2, 3), zwischen denen eine Schichtfolge mit wenigstens einer elektrischen Isolationsschicht (4, 5), die die beiden elektrischen Leiter (2, 3) gegeneinander elektrisch isoliert, und einem oder mehreren reaktiven Schichtstapeln (1, 1a, 1b) ausgebildet ist, in denen sich eine exotherme Reaktion auslösen lässt, wobei die eine oder die mehreren reaktiven Schichtstapel (1, 1a, 1b) und die wenigstens eine Isolationsschicht (4, 5) so aufeinander abgestimmt sind, dass sich die Isolationsschicht (4, 5) durch die bei der exothermen Reaktion von der oder den reaktiven Schichtstapeln (1, 1a, 1b) abgegebene Wärmeenergie auflöst und eine elektrische Verbindung zwischen den elektrischen Leitern (2, 3) hergestellt wird.

2. Überbrückungselement nach Anspruch 1,
**dadurch gekennzeichnet,**
**dass** die Schichtfolge an einem oder an beiden elektrischen Leitern (2, 3) eine Schicht (6, 7) aus einem Lotmaterial aufweist, das durch die von der oder den reaktiven Schichtstapeln (1, 1a, 1b) abgegebene Wärmeenergie zumindest teilweise schmilzt.

3. Überbrückungselement nach Anspruch 1,
**dadurch gekennzeichnet,**
**dass** die Schichtfolge mindestens die folgenden Schichten in der angegebenen Reihenfolge zwischen den elektrischen Leitern (2, 3) aufweist:
- eine erste Schicht (6) aus einem Lotmaterial,
- die elektrische Isolationsschicht (4),
- den reaktiven Schichtstapel (1),
- eine weitere elektrische Isolationsschicht (5) und
- eine zweite Schicht (7) aus einem Lotmaterial.

4. Überbrückungselement nach Anspruch 3,
**dadurch gekennzeichnet,**
**dass** zwischen der ersten Schicht (6) aus dem Lotmaterial und der Isolationsschicht (4) und/oder zwischen der zweiten Schicht (7) aus dem Lotmaterial und der weiteren Isolationsschicht (5) jeweils ein weiterer reaktiver Schichtstapel (1a, 1b) angeordnet ist.

5. Überbrückungselement nach einem der Ansprüche 1 bis 4, **dadurch gekennzeichnet,**
**dass** die elektrischen Leiter (2, 3) mit der dazwischen liegenden Schichtfolge in einer starren Halterung (10) mit elastischen Elementen (11) so eingespannt sind, dass die elektrischen Leiter (2, 3) durch die elastischen Elemente (11) gegen die Schichtfolge gedrückt werden.

6. Überbrückungselement nach einem der Ansprüche 1 bis 4, **dadurch gekennzeichnet,**
**dass** die beiden elektrischen Leiter (2, 3) mit einem von der Schichtfolge beabstandeten Abschnitt an einem starren Träger fixiert sind und unter mechanischer Vorspannung stehen, durch die sie gegen die Schichtfolge gedrückt werden.

7. Überbrückungselement nach einem der Ansprüche 1 bis 6, **dadurch gekennzeichnet,**
**dass** wenigstens einer der einen oder mehreren reaktiven Schichtstapel (1, 1a, 1b) mindestens auf einer Seite über die anderen Schichten der Schichtfolge hinausragt.

8. Überbrückungselement nach Anspruch 7,
**dadurch gekennzeichnet,**
**dass** der wenigstens eine reaktive Schichtstapel (1) in einem Bereich, der über die anderen Schichten der Schichtfolge hinausragt, einen Schichtaufbau aufweist, der eine Auslösung der exothermen Reaktion mit einem geringeren Energieeintrag ermöglicht als der Schichtaufbau in anderen Bereichen des reaktiven Schichtstapels (1).

9. Energiespeicher mit mehreren seriell verschalteten Speicherzellen, bei dem parallel zu jeder der Speicherzellen ein elektrisches Überbrückungselement nach einem der vorangehenden Patentansprüche geschaltet ist.

10. Energiespeicher nach Anspruch 9,
der eine Messeinrichtung zur Detektion eines bevorstehenden Ausfalls einer Speicherzelle und eine mit der Messeinrichtung verbundene Auslöseeinrichtung (8) aufweist, die bei Detektion eines bevorstehenden Ausfalls durch lokale Energieeinwirkung auf den reaktiven Schichtstapel (1) des zur ausfallenden Speicherzelle parallel geschalteten Überbrückungselementes eine exotherme Reaktion im reaktiven Schichtstapel (1) auslöst.

## Claims

1. An electrical bypass element comprising two electrical conductors (2, 3), between which a layer sequence is formed, said layer sequence comprising at least one electrical insulation layer (4, 5), which insulates the two electrical conductors (2, 3) electrically from one another, and one or more reactive layer stacks (1, 1a, 1b), in which an exothermic reaction can be triggered,
wherein the one or more reactive layer stacks (1, 1a, 1b) and the at least one insulation layer (4, 5) are matched to one another such that the insulation layer (4, 5) disintegrates as a result of thermal energy released by the reactive layer stack(s) (1, 1a, 1b) during the exothermic reaction and an electrical connection is produced between the electrical conductors (2, 3).

2. The bypass element according to Claim 1, **characterized in that** the layer sequence comprises a layer (6, 7) formed from a solder material at one or both electrical conductors (2, 3), which solder material melts at least in part as a result of the thermal energy released by the reactive layer stack(s) (1, 1a, 1b) during the exothermic reaction.

3. The bypass element according to Claim 1, **characterized in that** the layer sequence comprises at least the following layers in the specified order between the electrical conductors (2, 3):
- a first layer (6) formed from a solder material,
- the electrical insulation layer (4),
- the reactive layer stack (1),
- a further electrical insulation layer (5), and
- a second layer (7) formed from a solder material.

4. The bypass element according to Claim 3, **characterized in that** a further reactive layer stack (1a, 1b) is arranged in each case between the first layer (6) formed from the solder material and the insulation layer (4) and/or between the second layer (7) formed from the solder material and the further insulation layer (5).

5. The bypass element according to one of Claims 1 to 4, **characterized in that** the two electrical conductors (2, 3) with the layer sequence arranged therebetween are fixed in a rigid holder (10) by means of resilient elements (11) such that the electrical conductors (2, 3) are pressed against the layer sequence by the resilient elements (11).

6. The bypass element according to one of Claims 1 to 4, **characterized in that** the two electrical conductors (2, 3) are fixed to a rigid support via a portion distanced from the layer sequence and are under mechanical bias, as a result of which they are pressed against the layer sequence.

7. The bypass element according to one of Claims 1 to 6, **characterized in that** at least one of the one or more reactive layer stacks (1, 1a, 1b) protrudes beyond the other layers in the layer sequence at least on one side.

8. The bypass element according to Claim 7, **characterized in that** the at least one reactive layer stack (1) has a layer composition in a region protruding beyond the other layers in the layer sequence, said layer composition enabling the exothermic reaction to be triggered with a lower energy input than the layer composition in other regions of the reactive layer stack (1).

9. An energy storage device comprising a plurality of storage cells connected in series, in which an electrical bypass element according to one of the preceding claims is connected in parallel to each of the storage cells.

10. The energy storage device according to Claim 9, which comprises a measuring device for detecting an imminent failure of a storage cell and a triggering device (8) connected to the measuring device, said triggering device triggering an exothermic reaction in the reactive layer stack (1) upon detection of an imminent failure by means of a local application of energy over the reactive layer stack (1) of the bypass element connected in parallel to the failing storage cell.

## Revendications

1. Elément de pontage électrique composé de deux conducteurs électriques (2, 3), entre lesquels est constituée une suite de couches avec au moins une couche d'isolation électrique (4, 5), qui isole électriquement l'un de l'autre les deux conducteurs électriques (2, 3) et un ou plusieurs empilages de couches réactifs (1, 1a, 1b), dans lesquels une réaction exotherme peut être déclenchée, un ou plusieurs empilages de couches réactifs (1, 1a, 1b) et au moins une couche d'isolation (4, 5) étant adaptés l'un à l'autre de telle manière que la couche d'isolation (4, 5) se décompose par l'énergie thermique émise lors de la réaction exotherme du ou des empilages réactifs (1, 1a, 1b) et qu'une liaison électrique est établie entre les conducteurs électriques (2, 3).

2. Elément de pontage selon la revendication 1,
**caractérisé en ce que**
la suite de couches comporte sur un ou sur les deux conducteurs électriques (2, 3) une couche (6, 7) faite d'un matériau de brasage, qui fond au moins en partie par l'énergie thermique émise par le ou les empilages de couches réactifs (1, 1a, 1b).

3. Elément de pontage selon la revendication 1,
**caractérisé en ce que**
la suite de couches comporte entre les conducteurs électriques (2, 3), au moins les couches suivantes dans l'ordre indiqué :
- une première couche (6) dans un matériau de brasage,
- la couche d'isolation électrique (4),
- l'empilage de couches réactif (1),
- une autre couche d'isolation électrique (5), et
- une deuxième couche (7) faite d'un matériau de brasage.

4. Elément de pontage selon la revendication 3,
**caractérisé en ce qu'**
entre la première couche (6) faite d'un matériau de brasage et la couche d'isolation (4) et/ou entre la deuxième couche (7) faite d'un matériau de brasage et l'autre couche d'isolation (5) est respectivement disposé un autre empilage de couches réactif (1a, 1b).

5. Elément de pontage selon l'une quelconque des revendications 1 à 4,
**caractérisé en ce que**
les conducteurs électriques (2, 3) sont tendus dans une fixation rigide (10) avec des éléments élastiques (11) avec la suite de couches située entre ceux-ci de telle manière que les conducteurs électriques (2, 3) sont comprimés par les éléments élastiques (11) contre la suite de couches.

6. Elément de pontage selon l'une quelconque des revendications 1 à 4,
**caractérisé en ce que**
les deux conducteurs électriques (2, 3) sont fixés sur un support rigide avec une section éloignée de la suite de couches et se trouvent sous précontrainte mécanique par laquelle ils sont comprimés contre la suite de couches.

7. Elément de pontage selon l'une quelconque des revendications 1 à 6,
**caractérisé en ce qu'**
au moins un ou plusieurs empilages de couches réactifs (1, 1a, 1b) ressorte(nt) au moins sur un côté au-dessus des autres couches de la suite de couches.

8. Elément de pontage selon la revendication 7,
**caractérisé en ce qu'**
au moins un empilage de couches réactif (1) dans une zone qui dépasse au-dessus des autres couches, comporte une structure de couche, qui permet un déclenchement de la réaction exotherme avec un apport d'énergie plus faible que la structure de couche dans d'autres zones de l'empilage de couches réactif (1).

9. Accumulateur d'énergie avec plusieurs cellules de mémoire connectées en série, pour lequel un élément de pontage électrique est connecté parallèlement à chacune des cellules de mémoire selon l'une quelconque des revendications précédentes.

10. Accumulateur d'énergie selon la revendication 9
qui comporte un dispositif de mesure pour la détection d'une panne imminente d'une cellule de mémoire et un dispositif de déclenchement (8) associé au dispositif de mesure qui, lors de la détection d'une panne imminente, déclenche une réaction exotherme dans l'empilage de couches réactif (1) par un effet d'énergie local sur l'empilage de couches réactif (1) de l'élément de pontage connecté parallèlement à la cellule de mémoire défaillante.
